# EUROPEAN PATENT SPECIFICATION

(11) **EP 0 927 704 B1**
(45) Date of publication and mention of the grant of the patent: **21.07.2004**
(21) Application number: 98660139.1
(22) Date of filing: 11.12.1998
(51) Int. Cl.: C03B 33/033, C03B 33/027

(54) **Apparatus for removing a border strip external of a contour cut in a glass panel**
Vorrichtung zum Entfernen des äusseren Randes von einer geschnittenen Glasscheibe
Appareil pour enlever le contour d' une feuille de verre coupée

(30) Priority: 17.12.1997 FI 974538
(43) Date of publication of application: 07.07.1999
(73) Proprietor: Tamglass Ltd Oy, 33730 Tampere (FI)
(72) Inventor: Janhunen, Toivo, 33540 Tampere (FI); Anttonen, Kalevi, 33900 Tampere (FI)
(74) Representative: LEITZINGER OY

(56) References cited:
- EP-A- 0 401 825
- EP-A- 0 587 542
- EP-A- 0 719 737

## Description

The present invention relates to an apparatus for removing a border strip external of a contour cut in a glass panel or sheet, said apparatus comprising
- a suction pad for lifting a glass panel from a support or for pressing the same against a support, the suction pad having a vertical suction pad shaft,
- a removing finger in the vicinity of the suction pad, and
- moving elements for moving the suction pad and the removing finger at different height levels,
the suction pad, the removing finger and the moving elements being parts of a braking apparatus unit which is arranged to be moved to a number of desired border-removal points.

This type of apparatus is known from EP 0587542 A2. The apparatus is designed for cutting a large glass sheet into smaller sizes. The relative positions of suction pads and removing fingers can not be readjusted during the process. Therefore, the cutting-off direction can not be changed.

In a prior known apparatus according to the Applicant's patent publication EP-401825, the relative position of a suction pad and a removing finger cannot either be readjusted automatically during the process. However, there is a need for such action, should it be desirable to use the same apparatus in a plurality of border-removal points, to which the apparatus can be carried in a controlled fashion along x- and y-guideswhen the border-removal points are located along contour cut sections having substantially different mutual directions.

An object of the invention is to improve said apparatus, such that the position of a removing finger relative to a suction pad can be changed by means of automated control.

This object is achieved by means of an apparatus as set forth in the annexed claim 1.

A design that is structurally simple, reliable in operation, and compact is provided in such a way that a removing finger is journalled to be pivotable around a suction pad shaft.

EP-719 737 shows a border strip removing means which can be rotated around a central suction pad. The suction pad, however, can not be moved to a desired border-removal point and it does not participate to exertion of breaking force.

In a preferred embodiment of the invention, a piston-cylinder unit, maneuvering the removing finger in vertical direction, is fitted between a frame and a piston-cylinder unit maneuvering the suction pad in vertical direction, and operates the latter piston-cylinder unit and the suction pad suspended therefrom while it operates the removing finger. By virtue of this arrangement, the force bending off a border (i.e. a force between the suction pad and the removing finger) remains a structurally internal force, whereby the fluctuation of a glass thickness does not result in a necessity for adjusting the operating ranges. The removal action can be readily controlled in such a way that the glass does not come off a support. Hence, the glass has no tendency to slide or move on a support, either, and thus the re-positioning for a polishing operation is avoided

The generally employed apparatus constructions are provided with a support which is set underneath a glass panel and which conforms to the cutting line in terms of its shape and size, whereby the removal of a border can be performed by pressing the border to be removed from beyong the cutting line with various types of presses (a roller or finger press). This type of devices are able to apply a type of load on the glass similar to what is achieved by an apparatus of the invention. However, this necessitates a glass-specific support, which complies with the cutting line in terms of its shape and size and which is not required when using an apparatus of the invention, resulting in a simpler work process.

There are also solutions, which involve mechanical constructions underneath the glass for providing a mobile support. The mechanics is complicated, expensive, and difficult to control.

There are also mechanisms, wherein a clamp grasps the glass edge both from above and below the glass and bends precisely like the index finger and thumb This arrangement does not work in the middle of a glass panel, but only at a fixed distance from the glass edge, and requires bracing systems in order to have an access to the glass from below.

In a preferred embodiment of an apparatus of the invention, the apparatus is fitted with a cutting wheel for cutting initial incisions in a border strip. The cutting wheel is journalled to be pivotable around the vertical axis, whereby it is possible to select a desired cutting direction.

An apparatus which is simple in terms of its design and controll technology can be obtained in such a way that one and the same drive motor is adapted, through the action of gears, to rotate or pivot both the removing finger and the cutting wheel.

The invention will now be described in more detail by way of a working example, with reference made to the accompanying drawings, in which
- fig. 1: shows an apparatus of the invention in a frontal view and partially cut away;
- fig. 2: shows the apparatus of fig. 1 in a view from the side facing a suction pad;
- fig. 3: is a plan view, showing a glass panel provided with a cutting line, the border external thereof being removed by using an apparatus of the invention; and
- fig. 4: is a plan view of a border strip removing station.

The apparatus of the invention is construed as a component in a larger mechanical assembly, wherein a first automated machine (a cutting machine) cuts in a glass blank a contour coincident with a desired glass shape (typically an automotive side window), a second automated machine effects the removal of a border (a border removing machine), and a third automated machine performs grinding of the edge (a grinding machine), while a fourth automated machine or a conveyor takes care of carrying the glass from one machine to the next.

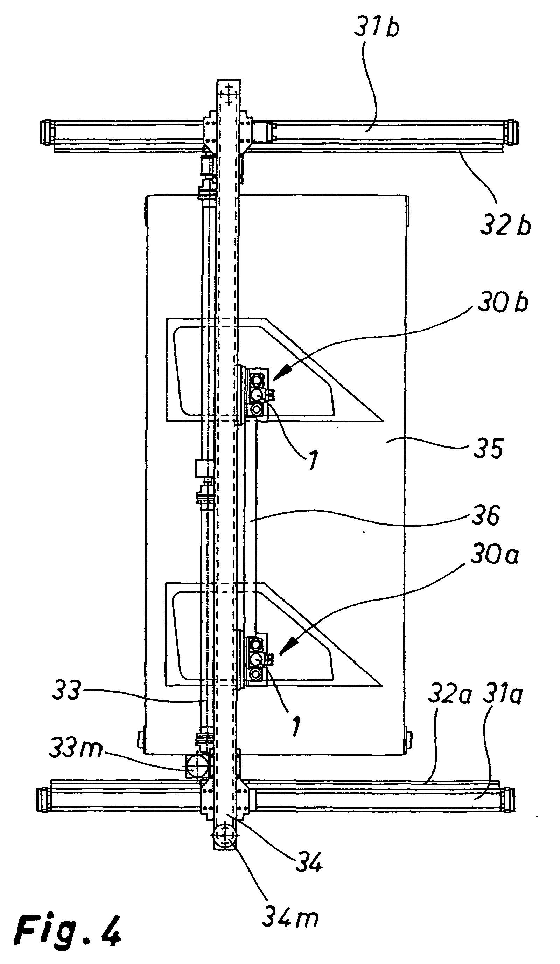

The apparatus that is the object of the invention is included in the border removing machine according to Fig. 4 and it carries out the regular actions associated with the removal of a border. The actions associated with the removal include initial incisions or incisive cuts for facilitating the removal of borders and the actual removal of borders.

The machine of Fig. 4 includes two braking apparatus units 30a and 30b which are connected with intermediate beam 36 to move in unison for handling two glass plates simultaneously on a support table or underframe 35. The units 30a, 30b are moved along x-guides 31a, 31b by a servo motor 33m and a cross-over shaft 33. Gear racks or pinions 32a, 32b are for drive engagement with x-guides. The movement along y-guide is controlled by servo motor 34

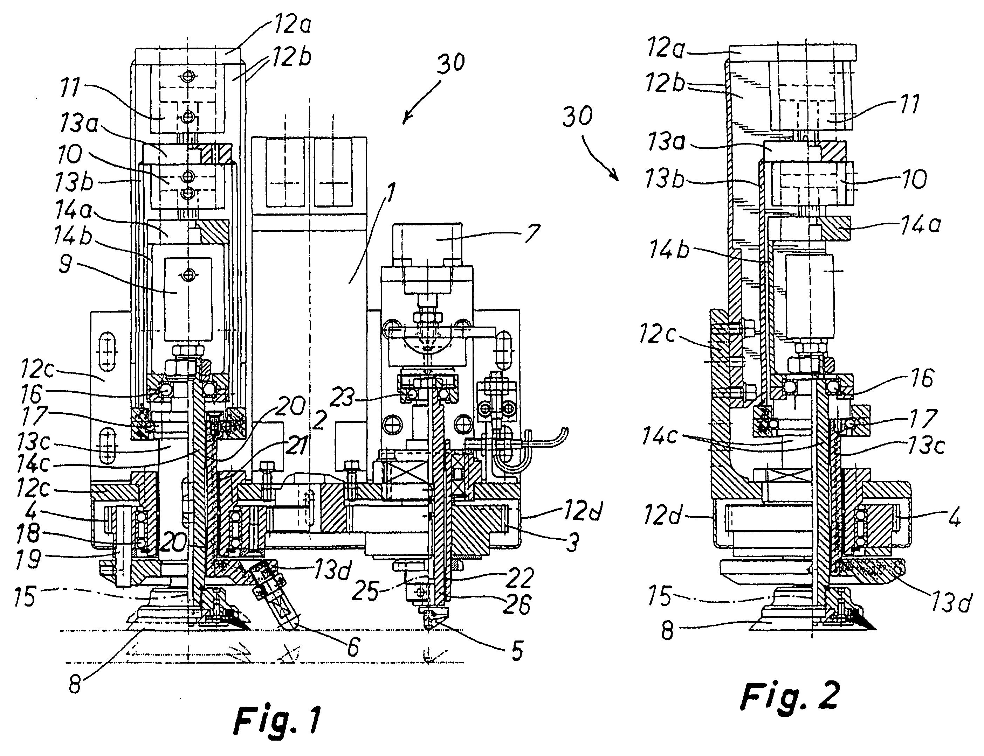

With reference to Figures 1 and 2 the following specification deals with the main structural components of the braking apparatus unit 30 and the functions thereof. A servo motor 1 makes use of the action of gears 2, 3, and 4 to drive a cutting wheel 5 and a removing finger 6. The cutting wheel 5 has a vertical axis of rotation 25 which extends through the cutting point of the wheel, whereby the position of a cutting point relative to the apparatus frame does not change. The removing finger 6 is rotated around a suction pad 8 and a centre axis 15 of a suction pad shaft 14c connected therewith.

In the basic condition, a cylinder 11 holds a unit consisting of the suction pad 8 and the removing finger 6 up off the glass and a cylinder 10 holds the suction pad lower than the removing finger. A cylinder 7 holds the cutting wheel 5 up.

The initial incisions are made by means of the cutting wheel 5 as follows. The motor 1 pivots the cutting wheel for a correct cutting direction. The braking apparatus unit 30 is carried along x- and y-guides (31a/31b and 34 in Fig. 4) to a desired cutting point, at which the cylinder 7 lowers the wheel 5 to a contact with the glass, the initial incision being produced by moving the entire apparatus along x-and y-guides in a desired direction, followed by lifting the cutting wheel 5 to the high position. One or more pieces of braking apparatus unit 30 are used for performing a required number of initial incisions. The purpose of initial incisions is to facilitate the successful removal of a border.

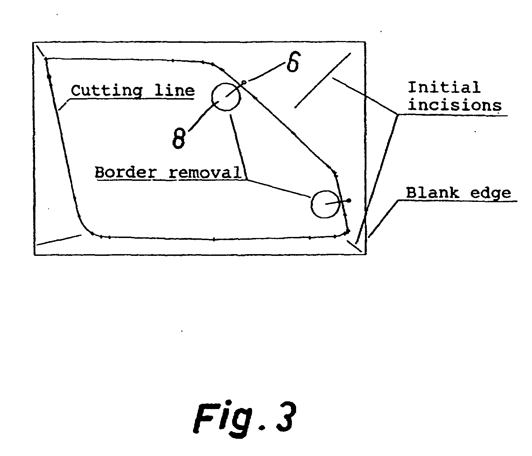

Then, the actual removal of a border is carried out as follows. The braking apparatus unit 30 is carried along x- and y-guides to a desired border-removal point and the removing finger 6 is pointed by means of the motor 1 in a direction which is correct with respect to the suction pad 8. As shown in fig. 3, the suction pad 8 is set inside the cutting line and the border-removing finger 6 outside the cutting line. The cylinder 11 is used for lowering the unit constituted by the suction pad 8 and the removing finger 6 down to contact with the glass while applying a slight pressure, the suction pad 8 coming down first against the glass, and so does also the removing finger 6 a little later, while the cylinder 10 depresses to half-way. When the bottom side of the piston of the cylinder 10 is pressurized, the suction pad 8 is able to rise upward relative to the removing finger 6. Thus, the removing finger remains pressed against the glass and the glass is held against the support (35 in Fig. 4) as a result of a force applied by the cylinder 11. As the cylinder 10 is lifting the suction pad 8 and as the cylinder 11, having its piston rod braced against the cylinder 10, is pressing the removing finger 6, the result is a relative movement between the suction pad and the removing finger with a structurally internal force within the cylinder 10. Consequently, the glass fractures along a cutting line extending between the suction pad 8 and the removing finger 6.

The piston-cylinder unit 10, operating the removing finger relative to the suction pad, can be located anywhere in the assembly, e.g. in the removing finger 6.

The following discusses further the details associated with the design and operation of an exemplary apparatus unit 30 depicted in the drawings, which details may vary in many ways and differ even essentially from the presently described exemplary apparatus

The apparatus has a main frame 12, which comprises the following component elements: a plate 12a, to which the cylinder 11 is secured; a trough-like vartical body 12b, which is secured with screws to an L-bar shaped frame element 12c, below which is a protective housing 12d for gears 2, 3, and 4

The bracing and mobility of the removing finger 6 is facilitated by a mobile sub-frame 13, which comprises the following components: a plate 13 between the piston rod of the cylinder 11 and the cylinder 10; a vertical chute 13b between the plate 13a and the outer rim of a bearing 17; a bushing 13c between the inner rim of the bearing 17 and a flange 13d. The removing finger 6 is secured to the flange 13d, which in turn connectes by way of a rod 19 to the gear 4. The bushing 13c is journalled with slide bearings 20 around the shaft 14c of the suction pad 8. The hollow suction pad shaft 14c has its top end fitted with a pneumatics coupling 9. The top end of the suction pad shaft 14c is fitted, through the intermediary of a bearing 16, with a second mobile frame element 14, including a vertical chute 14b and at its top end a plate 14a, to which the piston rod of the cylinder 10 is secured.

The cutting wheel 5 is provided with an axle 26, connected with a vertical-movement allowing slide bearing 22 to a bushing secured to the gear 3 and with a rotary-movement allowing bearing 23 to the piston rod of the lifting cylinder 7.

The described apparatus assembly is secured, e.g. by way of the frame element 12c, to the cradle of an x-y carrier. The motor 1 and the x-y carrier can be driven concurrently, such that the positions for the cutting wheel 5 and the removing finger 6 are reached by the time the apparatus has travelled to a desired working point

Although a single apparatus is sufficient for controlling the removal of the border of a glass panel all round, it may be preferable to make use of two pieces of apparatus, one at each end of a glass blank, whereby the operation will be quicker and the controls simpler.

The removal process based on cooperation between the suction pad 8 and the removing finger 6, as well as a possibility of performing an optional number of initial incisions at desired points, enables the apparatus of the invention to effect the border removal even along curved lines, i.e. the apparatus is capable of working also on automotive glass panels with curved border outlines. Several pieces of apparatus available in the market are only applicable to a removal process performed along straight lines.

## Claims

1. An apparatus for removing a border strip external of a contour cut in a glass panel, said apparatus comprising
- a suction pad (8) for lifting a glass panel from a support or for pressing the same against a support, the suction pad having a vertical suction pad shaft (14c),
- a removing finger (6) in the vicinity of the suction pad, and
- moving elements (10, 11) for moving the suction pad and the removing finger at different height levels,
the suction pad (8), the removing finger (6) and the moving elements (10, 11) being parts of a breaking apparatus unit (30) which is arranged to be moved to a number of desired border-removal points, **characterized in that**, the breaking apparatus unit (30) further comprises drive means (1, 2, 4) for rotating or pivoting the removing finger (6) around the vertical suction pad shaft (14c), the removing finger (6) being journalled to be pivotable around the vertical suction pad shaft (14c), whereby the position of the removing finger (6) relative to the suction pad (8) is alterable by said drive means (1, 2, 4) for positioning the suction pad to grip internal to the contour cut and for positioning the removing finger to press external to the contour cut at each of said desired border-removal points along contour cut sections having substantially different mutual directions.

2. An apparatus as set forth in claim 1, **characterized in that** the removing finger (6) has limited freedom of movement in the axial direction of the suction pad shaft (14c), the freedom of movement being unlimited at least over the distance required for said moving of the suction pad (8) and the removing finger (6) at different height levels relative to each other for removing the border strip.

3. An apparatus as set forth in claim 2, **characterized in that** the removing finger (6) is secured to a flange (13d) which is secured around the lower end of a bushing (13c), which surrounds the suction pad shaft (14c) and has its top end rotatably journalled (17) to an assembly (13a, 13b) connected to said moving elements (10, 11).

4. An apparatus as set forth in claim 2 or 3, **characterized in that** there is a first piston-cylinder unit (11) for moving the removing finger (6) and the suction pad (8) in unison in vertical direction, the first piston-cylinder unit (11) being fitted between a frame (12a, 12b, 12c) and a second piston-cylinder unit (10) for moving the second piston-cylinder unit (10), the removing finger (6) being suspended from the second piston-cylinder unit (10), the second piston-cylinder unit (10) moving the suction pad (8) and the removing finger (6) relative to each other in axial direction of the suction pad shaft (14c).

5. An apparatus as set forth in any of claims 1-4, **characterized in that** the braking apparatus unit (30) is fitted with a cutting wheel (5) for performing incision cuts, and that the cutting wheel is journalled to be pivotable around a vertical axis (25) for pivoting the cutting wheel (5) for a desired cutting direction.

6. An apparatus as set forth in claim 5, **characterized in that** one and the same drive motor (1) is adapted to pivot or rotate both the removing finger (6) and the cutting wheel (5).

## Patentansprüche

1. Vorrichtung zum Entfernen des äußeren Randes von einer geschnittenen Glasscheibe, wobei die Vorrichtung umfasst:
- einen Saugnapf (8) zum Anheben einer Glasscheibe von einem Gestell oder zum Drücken derselben gegen ein Gestell, wobei der Saugnapf eine vertikale Saugnapfwelle (14c) aufweist;
- einen Entfernstößel (6) in der Nähe des Saugnapfs und
- bewegende Teile (10, 11) zum Bewegen des Saugnapfs und des Entfernstößels auf verschiedenen Höhen,
wobei der Saugnapf (8), der Entfernstößel (6) und die bewegenden Teile (10, 11) Teile einer Brechvorrichtung (30) sind, die zu einer Reihe von gewünschten Randentfernungspunkten bewegt wird,
**dadurch gekennzeichnet, dass**
die Brechvorrichtung (30) ferner Antriebsmittel (1,2,4) zum Drehen oder Schwenken des Entfernstößels (6) um die vertikale Saugnapfwelle (14c) umfasst, wobei der Entfernstößel (6) so gelagert wird, dass er um die vertikale Saugnapfwelle (14c) herum schwenkbar ist, wodurch die Stellung des Entfernstößels (6) relativ zum Saugnapf (8) durch die Antriebsmittel (1,2,4) zum Positionieren des Saugnapfs veränderlich ist, um von innen auf den Umrissschnitt zu greifen und zum Positionieren des Entfernstößels veränderlich ist, um von außen gegen den Umrissschnitt an jedem der gewünschten Randentfernungspunkte längs der Umrissschnittbereiche mit im Wesentlichen unterschiedlichen, entgegengesetzten Richtungen zu drücken.

2. Vorrichtung nach Anspruch 1, **dadurch gekennzeichnet, dass** der Entfernstößel eine eingeschränkte Bewegungsfreiheit in der axialen Richtung der Saugnapfwelle (14c) hat, wobei die Bewegungsfreiheit mindestens über die Distanz uneingeschränkt ist, die für die Bewegung des Saugnapfs (8) und des Entfernstößels (6) an unterschiedlichen Höhen relativ zu einander zum Entfernen des Randstreifens erforderlich ist.

3. Vorrichtung nach Anspruch 2, **dadurch gekennzeichnet, dass** der Entfernstößel (6) an einem Flansch (13b) befestigt ist, der um das untere Ende einer Buchse (13c) herum befestigt ist, die die Saugnapfwelle (14c) umgibt und deren oberes Ende drehbar an einer Anordnung (13a, 13b) gelagert ist (17), die mit den bewegenden Teilen (10,11) verbunden ist.

4. Vorrichtung nach Anspruch 2 oder 3, **dadurch gekennzeichnet, dass** es eine erste Kolben-Zylinder-Einheit (11) zum übereinstimmenden Bewegen des Entfernstößels (6) und des Saugnapfs (8) in vertikaler Richtung gibt, wobei die erste Kolben-Zylinder-Einheit (11) zwischen einem Rahmen (12a, 12b, 12c) und einer zweiten Kolben-Zylinder-Einheit (10) zum Bewegen der zweiten Kolben-Zylinder-Einheit (10) eingepasst ist, wobei der Entfernstößel (6) an der zweiten Kolben-Zylinder-Einheit (10) aufgehängt ist und die zweite Kolben-Zylinder-Einheit (10) den Saugnapf (8) und den Entfernstößel (6) relativ zu einander in axialer Richtung der Saugnapfwelle (14c) bewegt.

5. Vorrichtung nach einem der Ansprüche 1 bis 4, **dadurch gekennzeichnet, dass** die Brechvorrichtung (30) mit einem Schneidrad (5) zum Durchführen von Kerbschnitten eingepasst ist und dass das Schneidrad so gelagert ist, dass es um eine vertikale Achse (25) zum Schwenken des Schneidrades (5) in eine gewünschte Schnittrichtung schwenkbar ist.

6. Vorrichtung nach Anspruch 5, **dadurch gekennzeichnet, dass** ein und derselbe Antriebsmotor (1) angepasst ist, um sowohl den Entfernstößel (6) als auch das Schneidrad (5) zu schwenken oder zu drehen.

## Revendications

1. Appareil pour enlever une bande d'encadrement à l'extérieur d'une découpe profilée dans une grande plaque de verre, ledit appareil comprenant
- un plateau-ventouse (8) pour soulever une grande plaque de verre à partir d'un support ou pour presser ladite plaque de verre contre le support, le plateau-ventouse possédant un arbre vertical (14c) de plateau-ventouse ;
- un doigt d'enlèvement (6) à proximité du plateau-ventouse ; et
- des éléments de déplacement (10, 11) pour déplacer le plateau-ventouse et le doigt d'enlèvement à différents niveaux de hauteur ;
le plateau-ventouse (8), le doigt d'enlèvement (6) et les éléments de déplacement (10, 11) faisant partie d'une unité d'appareil de rupture (30) qui est arrangé pour se déplacer à un certain nombre d'endroits désirés d'enlèvement d'encadrement, **caractérisé en ce que** l'unité d'appareil de rupture (30) comprend en outre des moyens d'entraînement (1, 2, 4) pour faire tourner ou pour faire pivoter le doigt d'enlèvement (6) autour de l'arbre vertical (14c) du plateau-ventouse, le doigt d'enlèvement (6) étant logé dans un tourillon pour pouvoir pivoter autour de l'arbre vertical (14c) du plateau-ventouse, la position du doigt d'enlèvement (6) par rapport au plateau-ventouse (8) pouvant être modifiée par lesdits moyens d'entraînement (1, 2, 4) afin de positionner le plateau-ventouse de façon à saisir l'intérieur de la découpe profilée et afin de positionner le doigt d'enlèvement de façon à exercer une pression depuis l'extérieur sur la découpe profilée à chacun desdits endroits désirés d'enlèvement d'encadrement le long de sections de la découpe profilée possédant des directions mutuelles essentiellement différentes.

2. Appareil selon la revendication 1, **caractérisé en ce que** le doigt d'enlèvement (6) possède une liberté de mouvement limitée dans la direction axiale de l'arbre (14c) du plateau-ventouse, la liberté de mouvement étant illimitée au moins sur la distance requise pour ledit déplacement dudit plateau-ventouse (8) et du doigt d'enlèvement (6) à différents niveaux de hauteur l'un par rapport à l'autre dans le but d'enlever la bande d'encadrement.

3. Appareil selon la revendication 2, **caractérisé en ce que** le doigt d'enlèvement (6) est fixé à une bride (13d) qui est fixée autour de l'extrémité inférieure d'une douille (13) qui entoure l'arbre (14c) du plateau-ventouse et dont l'extrémité supérieure est fixée en rotation via un tourillon (17) à un assemblage (13a, 13b) relié auxdits éléments de déplacement (10, 11).

4. Appareil selon la revendication 2 ou 3, **caractérisé en ce qu'**on prévoit une première unité (11) du type à piston-cylindre pour déplacer le doigt d'enlèvement (6) et le plateau-ventouse (8) à l'unisson en direction verticale, la première unité (11) du type à piston-cylindre étant insérée entre un cadre (12a, 12b, 12c) et une deuxième unité (10) du type à piston-cylindre pour déplacer la deuxième unité (10) du type à piston-cylindre, le doigt d'enlèvement (6) étant suspendu à la deuxième unité (10) du type à piston-cylindre, la deuxième unité (10) du type à piston-cylindre déplaçant le plateau-ventouse (8) et le doigt d'enlèvement (6) l'un par rapport à l'autre dans la direction axiale de l'arbre (14c) du plateau-ventouse.

5. Appareil selon l'une quelconque des revendications 1 à 4, **caractérisé en ce que** l'unité d'appareil de rupture (30) est équipée d'une roue de découpe (5) pour mettre en oeuvre des découpes sous forme d'incisions, et **en ce que** la roue de découpe est tourillonnée pour pouvoir pivoter autour d'un axe vertical (25) afin de faire pivoter la roue de découpe (5) dans une direction de découpe désirée.

6. Appareil selon revendication 5, **caractérisé en ce qu'**un seul et même moteur d'entraînement (1) est conçu pour faire pivoter ou pour faire tourner à la fois le doigt d'enlèvement (6) et la roue de découpe (5).
